# EUROPEAN PATENT SPECIFICATION

(11) **EP 3 034 286 B1**
(45) Date of publication and mention of the grant of the patent: **23.05.2018**
(21) Application number: 15200694.6
(22) Date of filing: 17.12.2015
(51) Int. Cl.: B29D 15/00, B29C 45/14, F16H 55/06

(54) **COMPOSITE SPROCKET WHEEL AND METHOD FOR FORMING THE SAME**
VERBUNDKETTENRAD UND VERFAHREN ZUR HERSTELLUNG DAVON
ROUE DENTÉE COMPOSITE ET SON PROCÉDÉ DE FABRICATION

(30) Priority: 18.12.2014 NL 2014004
(43) Date of publication of application: 22.06.2016
(73) Proprietor: Widek B.V., 2921 AA Krimpen aan den Ijssel (NL)
(72) Inventor: van de Lagemaat, Jan Pieter, 2921 AA Krimpen aan den IJssel (NL)
(74) Representative: V.O.

(56) References cited:
- EP-A1- 2 549 146
- JP-A- H04 193 511
- JP-A- 2004 052 791

## Description

The invention relates to a sprocket wheel, comprising a metal hub element and a toothed plastic rim portion.

Sprocket wheels are well known in the art of power transmission, for example as gears, chain gears, belt sprockets or the like. Sprocket wheels can for example be used as driving and/or driven sprocket wheels, also known as sprockets or sprocket gears.

Traditionally sprocket wheels are made homogeneous, which means that the entire sprocket wheel is made of the same material, for example metal or plastic. Such sprocket wheels can for example be made by forging, moulding and/or machining. Metal sprocket wheels are traditionally relatively heavy and costly to manufacture, especially for driving belts which are generally relatively wide compared to chains. Plastic sprocket wheels may be lighter than a similar sprocket wheel in metal, but are generally less durable, especially when injection moulded. When machining a sprocket wheel from a plastic material the sprocket wheel may be stronger, but such manufacturing is costly.

In order to overcome some of the problems of existing sprocket wheels, it has been proposed to provide composite sprocket wheels, wherein the teeth of the sprocket wheel are provided in a plastic part, mounted on or injection moulded onto a metal hub element.

For example WO2003/089813 discloses such a composite sprocket, comprising a metal hub element comprising a peripheral portion having a bottom surface and two side flanges. A plastic rim portion is mounted onto the peripheral portion, between the two flanges, extending radially outward from the bottom portion passed the flanges, such that teeth formed in the rim portion extend radially outward from the flanges. The rim portion is shrink fit onto the hub element. DE10201210278A1 discloses a similar construction of a sprocket wheel in which however a plastic rim portion provided with teeth is mounted over a T-shaped part extending from the periphery of the hub element.

US4722722 discloses a sprocket wheel and toothed belt having a metal disc shaped element with a central opening. The outer and inner perimeters of the disc shaped element are beveled and provided with retaining elements such as openings or undulations. Plastic is injection moulded over a side of the disc, forming a rim portion with teeth along the outer perimeter and a hub element along the inner perimeter. The teeth are provided radially outward from the metal part.

JP 2004-52791 discloses a further sprocket wheel in which metal fibers may be present in the injection-molded resin hub element. The present disclosure aims at providing an alternative composite sprocket wheel. The present disclosure aims at providing a sprocket wheel which is relatively easy in manufacturing and use. The disclosure aims at providing a sprocket wheel which is relatively light and sturdy, with a good resistance to undue wear. Another aim of the present disclosure is to provide for a sprocket wheel which reduces at least one of the problems of the known sprocket wheels at least in part. The present disclosure is moreover directed to a set of at least one sprocket wheel and a toothed belt and a method of forming a sprocket wheel. At least one of these and other aims are reached with a sprocket wheel according to the present disclosure.

In a first aspect a sprocket wheel can comprise a metal hub element with an hub opening, wherein at least an outer peripheral portion of the hub element is provided with a plastic rim portion having teeth. The hub element is provided with tooth elements extending into the teeth of the rim portion.

In a further elaboration in each tooth of the rim portion a tooth element of the hub element extends, such that each tooth of the rim portion, forming the teeth of the sprocket wheel, is supported by a metal tooth element. The metal tooth elements preferably extend into an addendum forming portion of the respective teeth of the rim portion, preferably to a position close to or in the top land of the tooth of the rim portion. This further improves the support of the teeth by the tooth elements of the rim portion.

In preferred embodiments each tooth of the hub element has a tooth profile comprising two faces on opposite sides, wherein at least one of said faces is covered by plastic, especially plastic of the rim portion. At least directly after production of a sprocket wheel each of said faces of the tooth element of the hub element may be covered by a layer of plastic of the rim portion, wherein the layer of plastic on a first of the faces has a larger thickness that the layer of plastic on the other of the faces. Alternatively and, preferably, at least during use, only one of the two faces of the tooth element of the hub element is covered by a layer of plastic of the rim portion. Meaning that one of the faces and/or flanks of teeth of the rim portion is formed in part by a face of a tooth element of the hub element and is thus made of metal. Preferably at least the side surfaces of each tooth element is also covered by plastic material of the rim portion.

In a sprocket wheel according to the present disclosure preferably the hub element comprises hub engagement elements extending into and/or from the hub opening and/or a hub opening which is non-circular. This means that the hub element can easily and sturdily be mounted on an axis or a shaft or the like. Hub engaging elements are preferably integrally formed with or on the hub element. Thus they can be made of metal, avoiding wear easily. Alternatively or additionally the hub opening can be non-circular, in order to mount the sprocket wheel on an axis or the like, wherein it can easily be prevented that the hub element can rotate around the axis.

In an aspect the disclosure can be directed to a set of at least one sprocket wheel according to the disclosure and a toothed belt for engagement with the teeth of the rim portion of the sprocket wheel. Such set preferably comprises at least two sprocket wheels, wherein the belt extends around the two sprocket wheels, wherein:
- in a first of the two sprocket wheels part of a face and/or flank of each tooth facing forward in clockwise direction is formed by a tooth portion of the hub element of the sprocket wheel; and
- in the second of the two sprocket wheels part of a face and/or flank of each tooth facing rearward in clockwise direction is formed by a tooth portion of the hub element of the sprocket wheel.

The part of the tooth face and/or flank of the sprocket wheel formed by the metal of the hub element, especially a tooth element thereof, can prevent undue wear of the teeth. Moreover it can aid in the easy transfer of load from the belt through the teeth to an axis, by means of the hub element, or vice versa. In a first of the two sprocket wheels the tooth elements of the hub element will be close to or flush with a first side of the teeth of the rim, in the other sprocket wheel with the opposite side. Thus the face of the teeth normally during bearing the highest load will have the metal support.

In the present disclosure also methods for forming a sprocket wheel are described. In such methods a metal hub element is formed having a hub opening and tooth elements extending from a periphery. The hub element is placed in a mould, where after plastic is injected into the mould. During injection moulding at least part of the tooth elements of the hub element are enclosed by said plastic, wherein the plastic forming a rim portion comprises the teeth of the sprocket wheel. The tooth elements extend into said teeth. Thus in a simple and effective manner a sprocket wheel is formed which is relatively light, sturdy and suitable for transferring loads to and/or from a drive member such as a toothed belt.

In preferred embodiments in the mould the hub element is placed such that each tooth element is positioned relatively close to or in contact with a first face and/or flank forming part of a tooth of the rim forming portion of the mould cavity, and spaced apart further from the opposite second face and/or flank forming part of a the same tooth of the rim forming portion of the mould cavity. Thus in the produced sprocket wheel each tooth element will be lying close to or even in a first face and/or flank of the relevant tooth of the rim portion and spaced apart from the opposite flank and/or face.

In the present disclosure embodiments of sprocket wheels will be described in which a metal surface of each tooth element is flush with and therefore an integral part of a tooth face and/or flank and/or top land of a tooth of a rim portion, i.e. of a tooth of the sprocket wheel. These sprocket wheels can be manufactured as such, for example using a method according to the disclosure. Alternatively such sprocket wheels can be produced having a thin layer of plastic of the rim portion covering the said tooth face directly after manufacturing. This layer can then be removed, for example directly after manufacturing, for example by peeling, machining, sanding, etching or any other suitable means. Alternatively the layer can be removed during use, by wear between a driving member such as a belt and the layer. The layer can have a thickness far smaller than the width of the tooth element, and can for example have a thickness in the order of tenths of a millimeter or less.

In the field of meshing gears US6993993 discloses a sheet metal outsert-molded composite gear for meshing with other gears, wherein a disc shaped metal member is provided with a central opening. A bearing section having a smooth, cylindrical inner opening is outsert-molded along an inner perimeter of the central opening, over part of the opposite side surfaces of the metal member. A rim portion is outsert-molded along an outer periphery of the metal member. Three injection points are provided in the mould, regularly spaced along the periphery of the metal element, for injecting plastic into a mould in which the rim portion and bearing section are to be formed. The rim portion comprises the teeth of the gear. In an embodiment the metal element is provided with three sets of four elements extending from the perimeter of the metal element, each set of four elements extending into four consecutive teeth. Between the sets of teeth into which an element extends three teeth are provided without such element. At the position of the middle one of each set of the three teeth one of the injection points is provided. A weld is formed in the rim portion between the middle two of each of the three sets of four elements. The sets of four elements extending form the disc element are designed for holding the rim in position and the distance between the teeth regular when one of the welds might break during use. To this end they have a T-shaped cross section. The elements are provided in the dedendum of the teeth, such that the addendum is made of solid plastic.

In further elucidation of the present invention embodiments of the present disclosure, such as embodiments of a sprocket wheel and a set formed therewith, as well as methods for forming the same shall be described hereafter, with reference to the drawings. In these embodiments the same or similar elements shall have the same or similar reference signs.
Fig. 1 shows in perspective view a sprocket wheel;
Fig. 2 shows in cross section along the line II - II in fig. 4 a sprocket wheel of fig. 1;
Fig. 3 shows in side view a tooth of a sprocket wheel, in cross section along the line II - II in fig. 4;
Fig. 3A shows schematically part of a hub element with a tooth element;
Fig. 4 shows in front view a tooth of a sprocket wheel, partly in cross section along the line IV - IV in fig. 3;
Fig. 5 shows schematically a set of two sprocket wheels and a belt, with at an enlarged scale in partly cross section teeth of the sprocket wheels an d the engaging belt; and
Fig. 6 shows schematically part of a mould for forming a sprocket wheel with a hub element placed therein, of which only a part is shown, including three tooth element with the relevant mould parts.

In the following description embodiments of a sprocket wheel, a set and a method according to the disclosure will be described, by way of example only. These embodiments should by no means be understood as limiting the disclosure or the scope of the invention. In this description the same or similar elements will be indicated with the same or similar reference signs, which are used for the purpose of increasing the intelligibility of the description only and not as limiting the disclosure.

In this description the term sprocket wheel has to be understood as at least encompassing but not limited to a wheel having teeth provided around an outer periphery of the wheel, suitable for cooperation with and/or meshing with teeth of a further wheel or of a belt. A sprocket wheel according to this disclosure can for example be, but is not limited to, part of a drive train for a bicycle, scooter or motor cycle, or can be used as for example part of a belt drive in an engine or cooling system, transport system or the like. Additionally or alternatively a sprocket wheel according to the disclosure can be part of a drive system having meshing gears, of which at least one can be according to the disclosure.

In this description metal can for example be but is not limited to steel, stainless steel, aluminium or aluminium alloy, magnesium or magnesium alloy, or any other suitable metal or metal alloy. In this description plastic can be any suitable plastic or plastic mixture, composite material, reinforced plastic such as for example fibre filled plastic, such as glass fibre reinforced plastic.

In this description terms like substantially, about, approximately and the like should be understood as having their ordinary meaning that slight alterations with respect to for example a dimension or orientation it refers to are also encompassed. In particular deviations of 25% or less, more in particular 15% or less, such as for example 10% or less of the value it refers to are considered to be encompassed by this wording.

In this description by way of example sprocket wheels and sets comprising such sprocket wheel shall be described which can be mounted on an axis directly. Alternatively such sprocket wheels can be mounted on other rotating elements. Such rotating element can for example be but not limited to a crank set, a lever, a wheel hub of a bike or another sprocket wheel of the same or different type.

In this description a side view should be understood, unless specifically indicated differently, a view along or parallel to a central axis of a sprocket wheel around which axis the sprocket wheel will rotate during use. A frontal view should be understood, unless specified differently, as a view perpendicular to a side view.

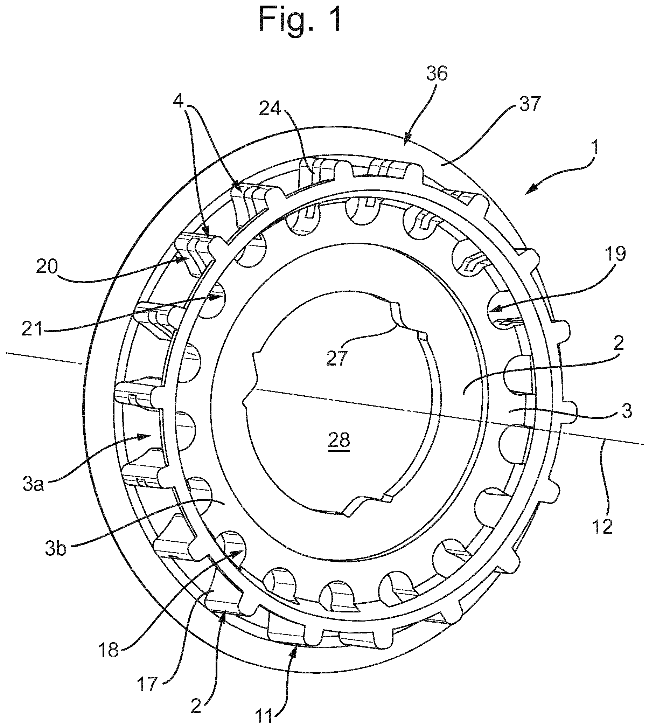

Fig. 1 shows in perspective view a sprocket wheel 1. The sprocket wheel 1 comprises a hub element 2 and a rim portion 3. The rim portion 3 comprises a series of teeth 4. In the embodiment shown in fig. 1 the rim portion comprises eighteen teeth 4, regularly spaced extending substantially radially. It shall be clear that any number of teeth can be provided, having any suitable configuration. In this disclosure the hub element 2 is made of metal. In this disclosure the rim portion 3 is made of plastic.

In embodiments of the present disclosure the rim portion 3 is preferably formed around a peripheral part of the hub element 2. The rim portion 3 is preferably made by injection moulding. The rim portion 3 is preferably securely connected to the hub element 2, such that the rim portion 3 cannot move relative to the hub element 2. Such connection can form example be achieved at least in part by injection moulding the rim portion 3 onto the hub element 2, by form lock, by adhering, by providing openings in the hub element into and/or through which the plastic of the rim portion can extend or combinations thereof. In the embodiments of the present disclosure however such connection is at least achieved by aid of tooth elements 5 of the hub element 2 extending into the teeth 4 of the rim portion 3.

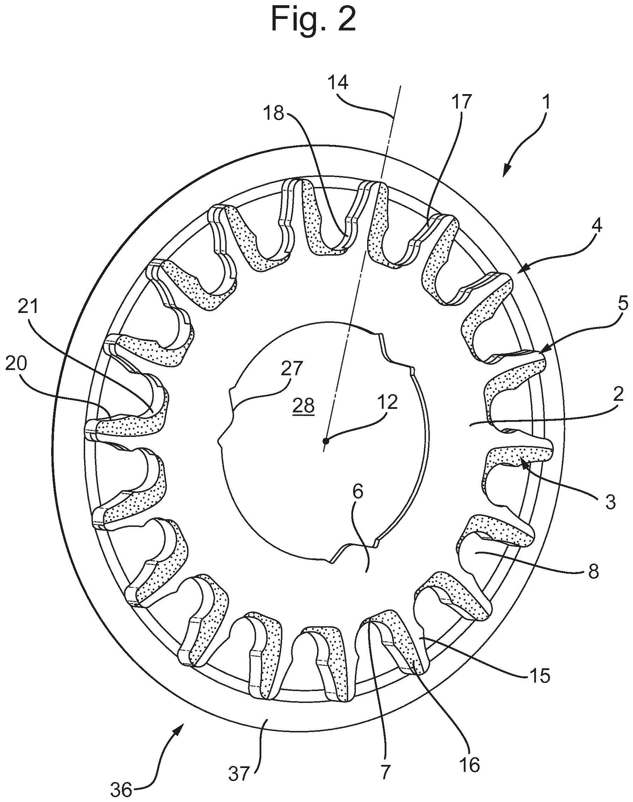

Fig. 2 shows, in a cross sectional side view, a sprocket wheel 1 of fig. 1, cut through the hub element 2 and the rim portion 3. As can be seen in fig. 2 the hub element 2 is provided with a series of tooth elements 5 extending substantially radially from the hub element 2. The hub element 2 preferably has the same number of tooth elements 5 as the sprocket wheel 1 has teeth, wherein one such tooth element 5 extends in each of the teeth 4 of the rim portion.

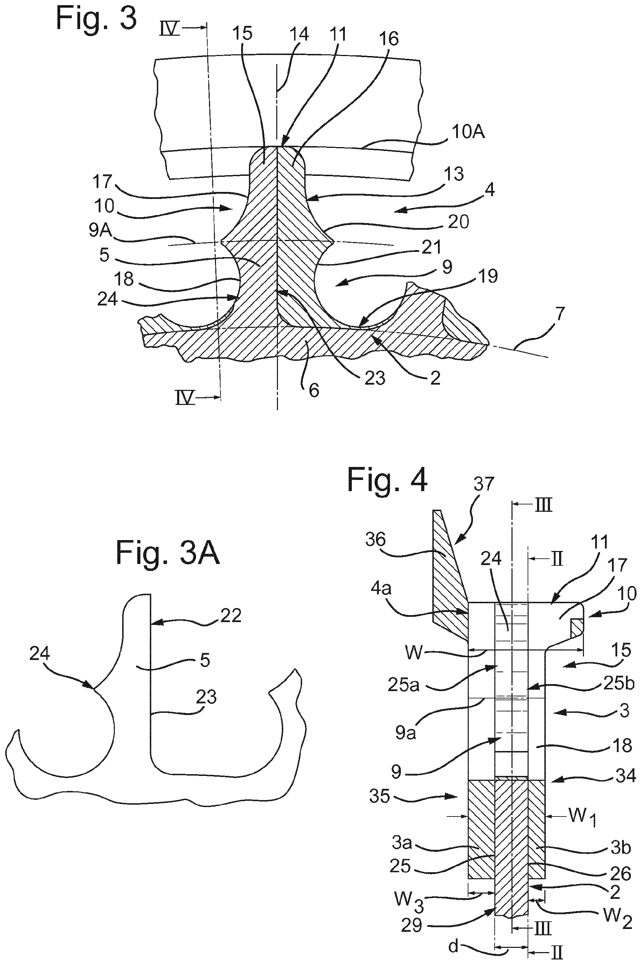

Fig. 3 shows a side view in cross section of a tooth 4 of a sprocket wheel 1, showing the tooth element 5. For the sake of comprehension in this description the hub element 2 will be described as having a central portion 6 defined by an imaginary circular perimeter 7, and a perimeter portion 8 formed by the tooth elements 5. Each tooth 4 has a part 9 adjacent the perimeter 7, generally referred to as the dedendum 9, and a part 10 at the side of the dedendum 9 facing radially outward of the central portion 6 of the hub element 2, generally referred to addendum 10. Between the dedendum 9 and the addendum 10 a dedendum circle 9A is drawn. Each tooth 5 has a top land 11. The top land 11 can form a surface of the tooth radially furthest from the axis 12 around which the sprocket wheel during use can rotate. An addendum circle 10A is drawn over the top lands 11. Each tooth 5 has a tooth profile 13. For each tooth 5 a mid sectional plane 14 can be defined, extending though the top land 11 and including the axis 12, dividing the tooth in a first part 15 and a second part 16. At a first side in fig. 3, for example the side to the left of the plane 14 the part of the tooth profile 13 of the first part 15 comprises a first face 17 extending substantially over the addendum 10, adjacent the top land, and a first flank 18 extending substantially over the dedendum 9, between a bottom land 19 between adjacent teeth 4 and the first face 17. At the opposite side of the plane 14, the part of the tooth profile 13 of the second part 16 comprises similarly a second face 20 and a second flank 21.

In embodiments shown the faces 17, 20 can be concave. In embodiments the flanks 18, 21 can be concave. In embodiments the top land 11 can be convex. In embodiments the tooth 5 can have the largest width or circular tooth thickness about mid height between the bottom land 19 and the top land 11 for example at the dedendum circle 9A. Obviously the tooth profile 13 can be chosen by the person skilled in the art depending on for example the application of the sprocket wheel, materials used, personal preferences and other criteria known to the skilled person.

As can be seen in for example fig. 3 the metal tooth element 5 extends primarily in the first part 15 of the tooth 4, whereas the second part 16 is primarily or entirely made of plastic. In the embodiment shown in fig. 3 the plastic and the metal of the tooth element connect to each other close to or at the plane 14, i.e. about halfway of the tooth width. The tooth element 5 extends through the dedendum 9 into the addendum 10 of the tooth 4. In embodiments preferably the tooth element 5 extends to a position close to or in the top land 11. Preferably all teeth 4 of the sprocket wheel are substantially identical such that a regular pattern of such teeth is obtained.

In embodiments each tooth element 5 of the hub element 2 has a tooth profile 22 comprising first and second faces 23, 24 on opposite sides seen in tangential direction, i.e. along the perimeter 7. At least one of said faces 23, 24 is covered by plastic, especially plastic of the rim portion 3. In fig. 3 the first face 23 closest to the plane 14 is covered by the plastic substantially forming the second part 16 of the tooth 4. Said first face 23 in the embodiment shown can for example be substantially straight and flat, but can also have different configurations. The said first face or surface 23 can be smooth or can be provided with for example structure, texture and/or coating for improving adherence between the plastic and the metal.

In embodiments the opposite second face 24 of the tooth element 5 can be substantially free of plastic, such that the said second face or surface 24 forms at least part of the face 17 and/or flank 18 of the first part 15 of each tooth 4 of the sprocket wheel 1.

Fig. 4 shows a front view of a tooth 4 of such a sprocket wheel 1, partly in cross section along the line IV - IV in fig. 3, wherein the tooth element 5 is provided such that its second face 24 is visible in and forms part of the relevant part of the tooth profile and especially part of the face 17 and flank 18 of the first part 15 of the tooth. In embodiments also part of the top land 11 can be formed by the tooth element 5. During use said face 24 can be engaged by for example teeth of a belt or another sprocket wheel or gear meshing with the teeth 4, reducing undue wear of the teeth 4 and providing a direct transfer of said forces at least in part directly to the hub element, reducing the forces acting on the plastic.

As can be seen in fig. 4 especially, the rim portion 3 has a thickness W, W₁, seen in axial direction, generally wider than the thickness d of the hub element 2, such that a first and second part 3a, 3b of the rim portion 3 extend on opposite side surfaces 25, 26 of a peripheral portion of the hub element, including on opposite side surfaces 25a, 25b of the tooth element 5, such that the tooth element 5 is enclosed in the plastic of the rim portion, except for the face 24 as discussed here before.

In embodiments the first face 24 of the tooth element 5 can also be covered by a thin layer of plastic, at least during and directly after manufacturing, which thin layer may partly or entirely be removed during and/or after manufacturing, for example by wear during initial use. Such thin layer may for example be formed during injection moulding of the plastic onto the hub element, as will be discussed. Such thin layer is preferably very thin, such as for example half a millimeter or less, more preferably tenths of millimeters or less, even more preferably 0.1 mm or less. In particular such thin layer has a thickness of a thin film resulting from positioning the hub element inside an injection mould with the face 24 pushed against a wall part of the mould without specific seals preventing plastic from flowing in between said face 24 and said mould wall part during injection moulding of the plastic. In embodiments the face 24 can be provide with a texture, for example ribs, ridges, notches or the like, in between which plastic can flow during injection moulding, ends of said texture being pushed against the wall part of the mould during injection moulding, reducing the force needed holding the said texture against the wall part for preventing flashing of the plastic.

With the latter embodiment after a short period of use an embodiment can be obtained in which the surface 24 at least in part lies in and preferably substantially flush with the face 17 and/or flank 18 of the first part 15 as previously discussed.

In embodiments, such as but not limited to the embodiments shown in fig. 1 and 2 the hub element 2 can be substantially flat. A hub element 2 for use in a sprocket wheel according to the disclosure can easily be made, for example by casting or machining. A hub element 2 for use in a sprocket wheel according to the disclosure can easily be made by cutting it from a metal plate, for example using laser cutting, gas or water jet cutting, milling, punching, sawing or any suitable known manner. In embodiments the hub element can be profiled, for example such that the tooth elements are angled relative to the central portion 6, for example in order to provided angled teeth 4 of the rim portion and/or sprocket wheel 1, and/or the tooth elements 5 can be set off axially side ways relative to the central portion 6.

In embodiments, such as but not limited to that of fig. 1 and 2, the hub element 2 can be provided with one or more hub engagement elements 27. Such hub engagement elements 27 can be engaged by for example an axis on which the sprocket wheel is to be mounted, a crank of a crank set, a motor such as an electrical motor or any other suitable element to drive the sprocket wheel and/or to be driven by the sprocket wheel. In the embodiments shown the hub engagement elements 27 are provided by way of protrusions extending into a hub opening 28. In a known manner the hub element 2 can then be mounted on an axel by sliding the hub opening 28 over the axel, the hub engagement elements 27 fitting in axial grooves or splines in or on the axel in a known manner. Alternatively or additionally the hub opening 28 can be non-circular, fitting snugly over an axel having a similar non-circular cross section, such that the sprocket wheel 1 is prevented from rotating around the axel.

By making the hub element 2 engage with the axel directly, for example by providing the metal hub element 2 with the hub engaging elements 27 and/or making the opening 28 non circular, a strong and sturdy connection is obtained, in a very easy manner.

Alternatively or additionally hub engaging elements 27 can be provided in and/or on a side surface 2a, 2b of the hub element 2, for example for connecting a crank of a crank set of a bike to the sprocket wheel 1. Such elements 27 can for example be formed or comprise screw threaded holes and/or stumps, openings for allowing a bolt to pass through or similar known connecting elements 27. Again such elements 27 are preferably provided on and/or in the metal hub element 2, though they can also be at least partly provided in and/or on the plastic rim portion 3.

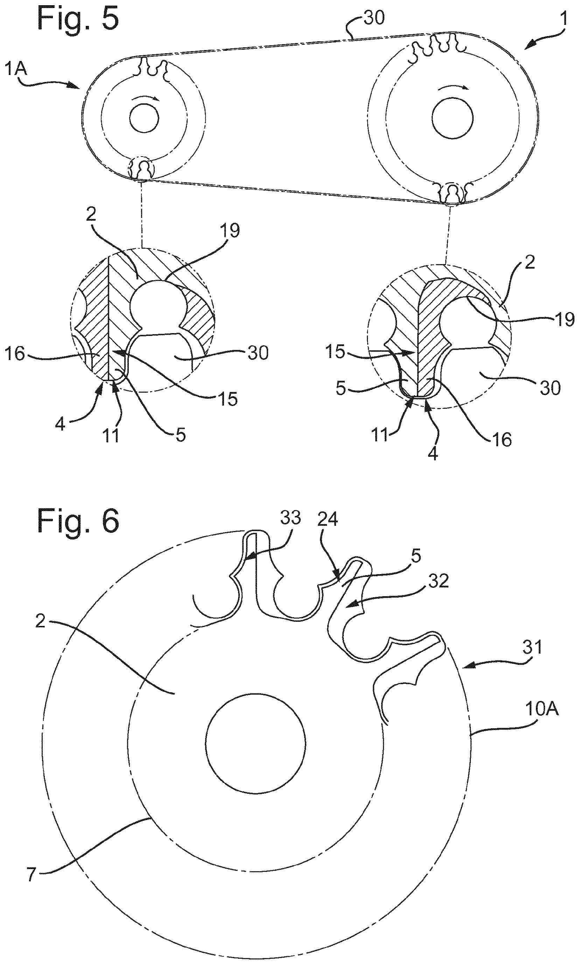

Fig. 5 shows set of two sprocket wheels 1, 1A. The first sprocket wheel 1 has a number of teeth 4 different from the number of teeth 3 of the second sprocket wheel 1A. A toothed belt 30 is provided around the sprocket wheels 1, 1A in a known manner, the teeth of the belt 30 engaging mainly with the addendum of the teeth 3 of the sprocket wheels 1, 1A. In the sprocket wheels 1, 1A part of a tooth 3 is broken away in the enlarged view in fig. 5, showing that in the first sprocket wheel 1 the tooth element 5 is provided such that it forms part of at least the relevant face at a leading side of the tooth 5 when rotating clock wise, whereas in the other sprocket wheel 1A the tooth element forms part of the relevant face at a trailing side of the tooth when rotating the sprocket wheel 1A clockwise. Thus the largest forces are transferred between the belt 30 and the relevant teeth 3 at least in part through the tooth elements 5 of the respective sprocket wheels 1, 1A. Obviously also other positions of the sprocket wheels are possible. Moreover, alternative to the belt 30 two sprocket wheels 1, 1A can engage with each other directly or indirectly in a different manner, for example as direct meshing gears. The belt 30 can be a drive belt, for example of a drive train, or for example a transport belt.

In fig. 6 a hub element 2 is schematically shown in a mould 31 for forming a sprocket wheel 1 of the disclosure. The mould cavity 32 of the mould has an outer wall formed such that for each tooth element 5 a wall portion 33 is provided to which a face 24 of the relevant tooth element 5 can be brought in close proximity. Preferably the relevant face 24 of the tooth element 5 is brought into contact with the wall part 33. Then the mould 31 is closed and plastic is inserted into the mould cavity 32 in a known manner for injection moulding the rim portion 3. In order to keep the mould 31 relatively simple the plastic material is allowed to flash between the said face 24 of each tooth element 5 and the relevant adjacent wall 33. This will lead to a very thin layer of plastic over said surface 24, which can then be removed after taking the sprocket wheel 1 from the cavity 32, for example mechanically. Preferably the layer is allowed to stay on the surface 24 such that at the start of use the layer will be removed by friction and wear.

Alternatively the face 24 of each tooth element 5 can be placed against the relevant wall 33 of the cavity such that no plastic will flash in between said face and said wall part 33. In a set according to this disclosure as e.g. shown in fig. 6 also only one sprocket wheel 1 can be according to this disclosure, the other for example entirely of plastic or metal or according to the prior art. Also more than two sprocket wheels can be provided in a set.

As can be seen in for example fig. 1 to 4 the teeth are wider at the peripheral side facing outward than at the central part 6 of the hub element 2 for example having widths W and W₁ respectively. The rim portion 3 can have, seen in cross section, a first part 34 facing radially inward and a second part 35 facing radially outward, wherein the first part 34 has a width W₂ smaller than the width W₃ of the second part 35, preferably about two-thirds of the width W₂ or less. The rim portion 3 can extend axially outward relative to the side surfaces 2a, 2b of the hub element 2 on one or both sides. The teeth 4 can be wider (W), seen in an axial direction, parallel to the axis 12, than the hub element 2. Thus a larger engaging surface of the teeth is provided for e.g a belt 30 or other sprocket wheel or gear.

In embodiments the rim portion 3 can comprise a guard 36 extending along part of one side surface 4a of the teeth of the rim portion 3, radially outward of the teeth 4. The guard 36 can extend substantially in a plane parallel to the relevant side surface 3a, 25a, 2a of the rim portion 3, teeth 4 and/or the hub element 2. On a side facing the teeth 4 the guard 36 can have a sloping surface 37, for pushing a belt 30 towards the teeth 4 and/or preventing such belt 30 during use from sliding off the teeth 4. In the embodiments shown the guard 37 is made entirely of plastic, integrally formed with the rim portion 3. Alternatively the guard 37 can be mounted to the rim portion 3 and/or the hub element 2 as a separate part. In embodiments one or more, or all of the tooth elements 5 can extend into the guard 37 as well. In embodiments the guard 37 can extend from a first side 4a of the teeth 4, wherein a first side of the teeth 4 of a radially outward part of the rim portion and a radially inward part of the rim portion 3 are substantially flush with each other, whereas the opposite second sides of the radially outward and radially inward parts of the rim portion 3 form a stepped surface. The relative position of the rim portion 3 and, especially the teeth 4 thereof with regard to the hub element 2 can be chosen depending on technical requirements such as, for example, force transmission, available space, width of a belt to be used with the sprocket wheel and other such design requirements as known to the skilled person.

The present invention is by no means limited to the embodiments as disclosed in the drawings and described here before. Many variations are possible with the scope as defined by the claims. For example different numbers and shapes of teeth can be provided, for example helical teeth or teeth for a chain. A rim portion can be provided with teeth in two parallel rows with differently sized addendum circles 10A. A hub element 2 can be made from more than one part. A central hub opening 25 can be provided with for example internal screw threads or bayonet means for mounting to an axis. The hub element 2 can be a closed element. The hub element 2 can be covered by plastic at one or both sides. Two or more hub elements 2 can be provided parallel to each other, connected at least by the rim portion 3. The plastic material can form a layer between said hub elements 2, increasing stiffness. Such hub elements can then be relatively thin, reducing weight of the sprocket wheel. The sprocket wheel can be provided with guards 35 on both sides, or without such guard, or with one or more differently shaped guards The teeth profile can be different, as can be the cross section of the teeth. These and different amendments, including all combinations of elements of the disclosed embodiments are also considered to have been disclosed herein.

## Claims

1. Sprocket wheel (1), comprising a metal hub element (2), wherein at least an outer peripheral portion of the hub element (2) is provided with a plastic rim portion (3) having teeth (4), wherein the hub element (2) is provided with tooth elements (5) extending into the teeth (4) of the rim portion (3).

2. Sprocket wheel (1) according to claim 1, wherein in each tooth (4) of the rim portion (3) a tooth element (5) of the hub element (2) extends, wherein preferably each tooth element (5) of the hub element (2) is covered on at least two opposite side surfaces (2A) by plastic, especially plastic of the rim portion (3) forming a tooth (4) of the rim portion (3)

3. Sprocket wheel (1) according to claim 1 or 2, wherein each tooth element (5) extends into a addendum (10) forming portion of a tooth (4) of the rim portion (3), preferably to a position close to or in the top land (11) of the tooth (4) of the rim portion (3).

4. Sprocket wheel (1) according to any one of the previous claims, wherein each tooth element (5) of the hub element (2) has a tooth profile (13) comprising two faces (23, 24) on opposite sides of a mid sectional plane (14), wherein at least one of said faces (23, 24) is covered by plastic, especially plastic of the rim portion (3).

5. Sprocket wheel (1) according to claim 4, wherein each of said faces (23, 24) of the tooth element (5) of the hub (2) element is covered by a layer of plastic of the rim portion (3), wherein the layer of plastic on a first of the faces (23) has a larger thickness that the layer of plastic on the other of the faces (24).

6. Sprocket wheel (1) according to claim 4, wherein only one of the two faces (23, 24) of the tooth element (5) of the hub element (2) is covered by a layer of plastic of the rim portion (3).

7. Sprocket wheel (1) according to any one of the previous claims, wherein a top land (11) of the tooth elements (5) of the hub element (2) is covered by plastic, especially plastic of the rim portion (3).

8. Sprocket wheel (1) according to any one of the previous claims, wherein the hub element (2) is provided with hub engagement elements (27) extending into and/or from a hub opening (28) and/or wherein the hub (2) element is provided with a non-circular hub opening and/or, wherein the hub element (2) is a substantially flat element.

9. Sprocket wheel (1) according to any one of the previous claims, wherein each tooth (4) of the rim portion (3) has a tooth profile (13), wherein each tooth (4) of the rim portion (3) has a first half (15) facing an adjacent tooth (4) at a first side of the tooth (14) and a second half (16) facing an adjacent tooth at a second side of the tooth (14), wherein the tooth element (5) of the hub portion (2) extends substantially only into one of the first and second half (15, 16).

10. Sprocket wheel (1) according to any one of the previous claims, wherein the rim portion (3) has a first part facing radially inward (34) and a second part facing radially outward (35), wherein the first part (34) has a width smaller than the second part (35), preferably about two-thirds of the width or less and/or wherein the rim portion (3) comprises a guard (36) extending along part of one side surface of the teeth (4) of the rim portion (3), radially outward of the teeth (4), wherein the guard (36) preferably extends from a first side of the teeth (4), wherein a first side of the teeth (4) of a radially outward facing part (35) of the rim portion (3) and a radially inward facing part (34) of the rim portion (3) are substantially flush with each other, whereas the axially opposite second sides of the outward facing and inward facing parts (35, 34) of the rim portion (3) form a stepped surface.

11. Sprocket wheel (1) according to any one of the previous claims, wherein the sprocket wheel (1) is a sprocket wheel (1) for a toothed belt (30).

12. Set of at least one sprocket wheel (1) according to any one of the previous claims and a toothed belt (30) for engagement with the teeth (4) of the rim portion (3) of the sprocket wheel (1).

13. Set according to claim 12, comprising at least two sprocket wheels (1), wherein the belt (30) extends around the two sprocket wheels (1,1A), wherein:
- in a first of the two sprocket wheels (1) part of a face (17, 18) and/or flank (23) of each tooth (4) facing forward in clockwise direction is formed by a tooth portion (5) of the hub element (2) of the sprocket wheel (1); and
- in the second of the two sprocket wheels (1A) part of a face and/or flank of each tooth facing rearward in clockwise direction is formed by a tooth portion (5) of the hub element (2) of the sprocket wheel (1).

14. Method for forming a sprocket wheel (1), wherein a metal hub element (2) is formed, preferably having a hub opening (28), and tooth elements (5) extending from a periphery, which hub element (2) is placed in a mould (31), where after plastic is injected into the mould (31), such that at least part of the tooth elements (5) of the hub element (2) are enclosed by said plastic, the plastic forming a rim portion (3) having teeth (4), the tooth elements (5) extending into said teeth (4).

15. Method according to claim 14, wherein in the mould (31) the hub element (2) is placed such that each tooth element (5) is positioned relatively close to or in contact with a first face (23) and/or flank forming part of a tooth (4) of the rim forming portion (3) of the mould cavity (32), and spaced apart further from the opposite second face (24) and/or flank forming part of a the same tooth (4) of the rim forming portion (3) of the mould cavity (32).

## Patentansprüche

1. Kettenrad (1), umfassend ein metallenes Nabenelement (2), wobei mindestens ein äußerer Umfangsabschnitt des Nabenelements (2) mit einem Randabschnitt (3) aus Kunststoff mit Zähnen (4) versehen ist, wobei das Nabenelement (2) mit Zahnelementen (5) versehen ist, die in die Zähne (4) des Randabschnitts (3) verlaufen.

2. Kettenrad (1) nach Anspruch 1, wobei in jedem Zahn (4) des Randabschnitts (3) ein Zahnelement (5) des Nabenelements (2) verläuft, wobei bevorzugt jedes Zahnelement (5) des Nabenelements (2) auf mindestens zwei gegenüberliegenden Seitenoberflächen (2A) bedeckt ist von Kunststoff, besonders Kunststoff des Randabschnitts (3), bildend einen Zahn (4) des Randabschnitts (3).

3. Kettenrad (1) nach Anspruch 1 oder 2, wobei jedes Zahnelement (5) in einen Abschnitt, der einen Anhang (10) eines Zahns (4) des Randabschnitts (3) bildet, verläuft, bevorzugt zu einer Position, nahe bei oder in dem oberen Steg (11) des Zahns (4) des Randabschnitts (3).

4. Kettenrad (1) nach einem der vorhergehenden Ansprüche, wobei jedes Zahnelement (5) des Nabenelements (2) ein Zahnprofil (13), umfassend zwei Flächen (23, 24) auf gegenüberliegenden Seiten einer Mittelstückebene (14), hat, wobei mindestens eine der Flächen (23, 24) von Kunststoff bedeckt ist, besonders Kunststoff des Randabschnitts (3).

5. Kettenrad (1) nach Anspruch 4, wobei jede der Flächen (23, 24) des Zahnelements (5) des Nabenelements (2) von einer Schicht aus Kunststoff des Randabschnitts (3) bedeckt ist, wobei die Schicht aus Kunststoff auf einer ersten der Flächen (23) eine größere Dicke hat als die Schicht aus Kunststoff auf der anderen der Flächen (24).

6. Kettenrad (1) nach Anspruch 4, wobei nur eine der zwei Flächen (23, 24) des Zahnelements (5) des Nabenelements (2) von einer Schicht aus Kunststoff des Randabschnitts (3) bedeckt ist.

7. Kettenrad (1) nach einem der vorhergehenden Ansprüche, wobei ein oberer Steg (11) des Zahnelements (5) des Nabenelements (2) von Kunststoff bedeckt ist, besonders Kunststoff des Randabschnitts (3).

8. Kettenrad (1) nach einem der vorhergehenden Ansprüche, wobei das Nabenelement (2) mit Nabeneingriffselementen (27), verlaufend in die und/oder von der Nabenöffnung (28) versehen ist, wobei das Nabenelement (2) mit einer nicht kreisförmigen Öffnung versehen ist und/oder wobei das Nabenelement (2) ein im Wesentlichen flaches Element ist.

9. Kettenrad (1) nach einem der vorhergehenden Ansprüche, wobei jeder Zahn (4) des Randabschnitts (3) ein Zahnprofil (13) hat, wobei jeder Zahn (4) des Randabschnitts (3) eine erste Hälfte (15) gegenüber einem benachbarten Zahn (4) an einer ersten Seite des Zahns (14) und eine zweite Hälfte (16) gegenüber einem benachbarten Zahn an einer zweiten Seite des Zahns (14) hat, wobei das Zahnelement (5) des Nabenabschnitts (2) im Wesentlichen nur in eine der ersten und zweiten Hälfte (15, 16) verläuft.

10. Kettenrad (1) nach einem der vorhergehenden Ansprüche, wobei der Randabschnitt (3) einen ersten, radial nach innen gerichteten Teil (34) und einen zweiten, radial nach außen gerichteten Teil (35) hat, wobei der erste Teil (34) eine Breite kleiner als der zweite Teil (35) hat, bevorzugt ungefähr zwei Drittel der Breite oder weniger, und/oder wobei der Randabschnitt (3) eine Abschirmung (36) umfasst, verlaufend entlang eines Teils einer Seitenoberfläche des Zahns (4) des Randabschnitts (3), radial nach außen von dem Zahn (4), wobei die Abschirmung (36) bevorzugt von einer ersten Seite des Zahns (4) verläuft, wobei eine erste Seite des Zahns (4) eines radial nach außen gerichteten Teils (35) des Randabschnitts (3) und eines radial nach innen gerichteten Teils (34) des Randabschnitts im Wesentlichen fluchtend zueinander sind, während die axial gegenüberliegenden Seiten der nach außen gerichteten und nach innen gerichteten Teile (35, 34) des Randabschnitts (3) eine stufenförmige Oberfläche bilden.

11. Kettenrad (1) nach einem der vorhergehenden Ansprüche, wobei das Kettenrad (1) ein Kettenrad (1) für einen Zahnriemen (30) ist.

12. Satz von mindestens einem Kettenrad (1) nach einem der vorhergehenden Ansprüche und einem Zahnriemen (30) zum Eingreifen mit dem Zahn (4) des Randabschnitts (3) des Kettenrads (1).

13. Satz nach Anspruch 12, umfassend mindestens zwei Kettenräder (1), wobei der Riemen (30) um die zwei Kettenräder (1, 1A) herum verläuft, wobei:
- in einem ersten der zwei Kettenräder (1) ein Teil einer Fläche (17, 18) und/oder Flanke (23) von jedem Zahn (4), vorwärts im Uhrzeigersinn ausgerichtet, von einem Zahnabschnitt (5) des Nabenelements (2) des Kettenrads (1) gebildet wird; und
- in dem zweiten der zwei Kettenräder (1A) ein Teil einer Fläche und/oder Flanke von jedem Zahn, nach hinten im Uhrzeigersinn gerichtet, von einem Zahnabschnitt (5) des Nabenelements (2) des Kettenrads (1) gebildet wird.

14. Verfahren zum Bilden eines Kettenrads (1), wobei ein metallenes Nabenelement (2) gebildet wird, bevorzugt mit einer Nabenöffnung (28) und Zahnelementen (5), verlaufend von einem Umfang, welches Nabenelement (2) in eine Form (31) platziert wird, wo, nachdem Kunststoff in die Form (31) eingespritzt wurde, sodass mindestens ein Teil der Zahnelemente (5) des Nabenelements (2) von dem Kunststoff umschlossen wird, der Kunststoff einen Randabschnitt (3) mit Zähnen (4) bildet, welche Zahnelemente (5) in die Zähne (4) verlaufen.

15. Verfahren nach Anspruch 14, wobei in der Form (31) das Nabenelement (2) so platziert wird, dass jedes Zahnelement (5) relativ nahe oder in Kontakt mit einem ersten, eine Fläche (23) und/oder Flanke bildenden Teil eines Zahns (4) des den Rand bildenden Abschnitts (3) des Formhohlraums (32) und oder weiter beabstandet von dem gegenüberliegenden, eine zweite Fläche (24) und/oder Flanke bildenden Teils desselben Zahns (4) des den Rand bildenden Abschnitts (3) des Formhohlraums (32) positioniert ist.

## Revendications

1. Roue dentée (1), comprenant un élément de moyeu métallique (2), dans laquelle au moins une partie périphérique externe de l'élément de moyeu (2) est prévue avec une partie de jante en plastique (3) ayant des dents (4), dans laquelle l'élément de moyeu (2) est prévu avec des éléments de dent (5) s'étendant dans les dents (4) de la partie de jante (3).

2. Roue dentée (1) selon la revendication 1, dans laquelle dans chaque dent (4) de la partie de jante (3) s'étend un élément de dent (5) de l'élément de moyeu (2), dans laquelle de préférence chaque élément de dent (5) de l'élément de moyeu (2) est recouvert sur au moins deux surfaces latérales (2A) opposées par du plastique, en particulier du plastique de la partie de jante (3) formant une dent (4) de la partie de jante (3) .

3. Roue dentée (1) selon la revendication 1 ou 2, dans laquelle chaque élément de dent (5) s'étend dans une saillie (10) formant une partie d'une dent (4) de la partie de jante (3), de préférence dans une position à proximité de ou dans le sommet supérieur (11) de la dent (4) de la partie de jante (3).

4. Roue dentée (1) selon l'une quelconque des revendications précédentes, dans laquelle chaque élément de dent (5) de l'élément de moyeu (2) a un profil de dent (13) comprenant deux faces (23, 24) sur des côtés opposés d'un plan transversal central (14), dans laquelle au moins l'une desdites faces (23, 24) est recouverte par du plastique, en particulier le plastique de la partie de jante (3).

5. Roue dentée (1) selon la revendication 4, dans laquelle chacune desdites faces (23, 24) de l'élément de dent (5) de l'élément de moyeu (2) est recouverte par une couche de plastique de la partie de jante (3), dans laquelle la couche de plastique sur une première des faces (23) a une épaisseur plus importante que la couche de plastique sur l'autre des faces (24).

6. Roue dentée (1) selon la revendication 4, dans laquelle une seule des deux faces (23, 24) de l'élément de dent (5) de l'élément de moyeu (2) est recouverte par une couche de plastique de la partie de jante (3).

7. Roue dentée (1) selon l'une quelconque des revendications précédentes, dans laquelle un sommet supérieur (11) des éléments de dent (5) de l'élément de moyeu (2) est recouvert par du plastique, en particulier le plastique de la partie de jante (3).

8. Roue dentée (1) selon l'une quelconque des revendications précédentes, dans laquelle l'élément de moyeu (2) est prévu avec des éléments de mise en prise de moyeu (27) s'étendant dans et/ou depuis une ouverture de moyeu (28) et/ou dans laquelle l'élément de moyeu (2) est prévu avec une ouverture de moyeu non circulaire et/ou, dans laquelle l'élément de moyeu (2) est un élément sensiblement plat.

9. Roue dentée (1) selon l'une quelconque des revendications précédentes, dans laquelle chaque dent (4) de la partie de jante (3) a un profilé de dent (13), dans laquelle chaque dent (4) de la partie de jante (3) a une première moitié (15) faisant face à une dent (4) adjacente au niveau d'un premier côté de la dent (14) et une seconde moitié (16) faisant face à une dent adjacente au niveau d'un second côté de la dent (14), dans laquelle l'élément de dent (5) de la partie de moyeu (2) s'étend sensiblement uniquement dans l'une des première et seconde moitiés (15, 16).

10. Roue dentée (1) selon l'une quelconque des revendications précédentes, dans laquelle la partie de jante (3) a une première partie orientée radialement vers l'intérieur (34) et une seconde partie orientée radialement vers l'extérieur (35), dans laquelle la première partie (34) a une largeur inférieure à la seconde partie (35), de préférence environ deux tiers de la largeur ou moins et/ou dans laquelle la partie de jante (3) comprend un élément de protection (36) s'étendant le long d'une partie d'une surface latérale des dents (4) de la partie de jante (3), radialement vers l'extérieur des dents (4), dans laquelle l'élément de protection (36) s'étend de préférence à partir d'un premier côté des dents (4), dans lequel un premier côté des dents (4) d'une partie orientée radialement vers l'extérieur (35) de la partie de jante (3) et une partie orientée radialement vers l'intérieur (34) de la partie de jante (3) sont sensiblement au même niveau entre eux, alors que les seconds côtés axialement opposés des parties orientées vers l'extérieur et vers l'intérieur (35, 34) de la partie de jante (3) forment une surface étagée.

11. Roue dentée (1) selon l'une quelconque des revendications précédentes, dans laquelle la roue dentée (1) est une roue dentée (1) pour une courroie dentée (30).

12. Ensemble composé d'au moins une roue dentée (1) selon l'une quelconque des revendications précédentes, et d'une courroie dentée (30) pour la mise en prise avec les dents (4) de la partie de jante (3) de la roue dentée (1).

13. Ensemble selon la revendication 12, comprenant au moins deux roues dentées (1), dans lequel la courroie (30) s'étend autour des deux roues dentées (1, 1A), dans lequel :
- dans une première des deux roues dentées (1), une partie d'une face (17, 18) et/ou d'un flanc (23) de chaque dent (4) orientée vers l'avant dans le sens des aiguilles d'une montre est formée par une partie de dent (5) de l'élément de moyeu (2) de la roue dentée (1) ; et
- dans la seconde des deux roues dentées (1A), une partie d'une face et/ou d'un flanc de chaque dent orientée vers l'arrière dans le sens des aiguilles d'une montre est formée par une partie de dent (5) de l'élément de moyeu (2) de la roue dentée (1).

14. Procédé pour former une roue dentée (1), dans lequel un élément de moyeu métallique (2) est formé, de préférence ayant une ouverture de moyeu (28), et des éléments de dent (5) s'étendant à partir d'une périphérie, lequel élément de moyeu (2) est placé dans un moule (31), après quoi le plastique est injecté dans le moule (31), de sorte qu'au moins une partie des éléments de dent (5) de l'élément de moyeu (2) est enfermée par ledit plastique, le plastique formant une partie de jante (3) ayant des dents (4), les éléments de dent (5) s'étendant dans lesdites dents (4).

15. Procédé selon la revendication 14, dans lequel dans le moule (31), l'élément de moyeu (2) est placé de sorte que chaque élément de dent (5) est positionné relativement près ou en contact avec une première partie de formation de face et/ou de flanc (23) d'une dent (4) de la partie de formation de jante (3) de la cavité de moule (32), et espacé de la seconde partie de formation de face et/ou de flanc (24) opposée de la même dent (4) de la partie de formation de jante (3) de la cavité de moule (32).
